# EUROPÄISCHE PATENTSCHRIFT

(11) **EP 2 030 822 B1**
(45) Veröffentlichungstag und Bekanntmachung des Hinweises auf die Patenterteilung: **19.12.2012**
(21) Anmeldenummer: 08012715.2
(22) Anmeldetag: 15.07.2008
(51) Int. Cl.: B60J 7/00, B60J 1/20, E06B 9/40, D06C 3/08

(54) **Verfahren zur Anbringung von Führungsmitteln an einem flexiblen Flächengebilde sowie Vorbereitungsvorrichtung hierfür**
Method for attaching guides to a flexible textile sheet and preparation device for same
Procédé d'application de moyens de guidage sur une structure plate flexible et dispositif de préparation correspondant

(30) Priorität: 29.08.2007 DE 102007042196
(43) Veröffentlichungstag der Anmeldung: 04.03.2009
(73) Patentinhaber: BOS GmbH & Co. KG, 73760 Ostfildern (DE)
(72) Erfinder: Jakobi, Manfred, 99994 Schlotheim (DE); Renz, Günter, 71254 Ditzingen (DE); Stark, Wolfgang, 73770 Denkendorf (DE); Winter, Karl-Heinz, 71336 Waiblingen (DE)
(74) Vertreter: Patentanwälte Ruff, Wilhelm, Beier, Dauster & Partner

(56) Entgegenhaltungen:
- DE-A1- 10 306 629
- DE-A1-102005 038 373
- DE-B3- 10 253 816
- US-A- 4 660 308

## Beschreibung

Die Erfindung betrifft ein Verfahren zur Anbringung von Führungsmitteln an einem flexiblen Flächengebilde, vorzugsweise als Teil eines Beschattungssystems für ein Fahrzeug. Die Erfindung betrifft weiterhin eine Vorrichtung zur Vorbereitung eines flexiblen Flächengebildes zur Anbringung von Führungsmitteln im Rahmen der Herstellung eines solchen Systems, insbesondere eines Beschattungssystems für ein Fahrzeug.

Rollosysteme mit flexiblen Flächengebilden finden in Fahrzeugen Anwendung zu verschiedenen Zwecken. Neben Laderaumabdeckungen und Trennnetzen können insbesondere Beschattungssysteme mit rolloartig ausziehbaren Flächengebilden ausgebildet sein, die fallweise oder permanent in einen Zustand gebracht werden können, in dem sie einzelne Fensterflächen oder beispielsweise auch ein offenes Dach überspannen. Eine mögliche Form der Festlegung solcher Flächengebilde in ihrem ausgezogenen Funktionszustand sieht vor, dass die Flächengebilde in einem gespannten Zustand beidseitig im Fahrzeug festgelegt sind, wobei diese Festlegung vorzugsweise ein Verschieben des Flächengebildes in Ausrichtungsrichtung der Festlegemittel gestattet. Bei einer solchen Ausgestaltung werden die Flächengebilde üblicherweise in einem vorgespannten Zustand in das Fahrzeug eingesetzt, wobei die Vorspannung derart bemessen ist, dass die Flächengebilde auch im Zuge altersbedingter und umweltbedingter Einflüsse nicht in störendem Maße durchhängen.

Zur Herstellung eines solchen Flächengebildes, welches im Fahrzeug unter Vorspannung eingesetzt wird, werden die Führungsmittel auf Seiten des Flächengebildes üblicherweise in geringerem Maße voneinander beabstandet als die korrespondierenden fahrzeugfesten Führungsmittel. Dies führt dazu, dass eine Vorspannung beim Einsetzen in das Fahrzeug in Folge der erzwungenen Dehnung erzeugt wird.

Als nachteilig an der üblichen Vorgehensweise, bei der die Beabstandung der flächengebildeseitigen Führungsmittel gegenüber der Beabstandung der fahrzeugfesten Führungsmittel geringer ist, wird angesehen, dass dieses Vorgehen abhängig von dem Material, aus dem das flexible Flächengebilde hergestellt ist, zu verschieden ausfallenden Ergebnissen führen kann. Obwohl die flächengebildeseitigen Führungsmittel im ungespannten Zustand in immer dem gleichen Abstand zueinander am Flächengebilde befestigt werden, ist die Spannkraft im eingesetzten Zustand nicht einheitlich, sondern zum Teil zu hoch und zum Teil zu niedrig.

Als Stand der Technik ist aus der US 4,660,308 ist ein Halterahmen zur Handhabung von flächigen Membranen bekannt, bei dem vorgesehen ist, dass eine darin festgelegte Membran durch Gewindebolzen parallel zu ihrer Erstreckungsrichtung gespannt werden kann. Aus der DE 10306629 A1 ist eine ähnliche Gestaltung eines Spannrahmens bekannt, der über Spannelemente zur Festlegung eines Flachmaterials verfügt, welche in zwei unterschiedlichen Richtungen gegenüber einem Rahmenprofil bewegbar sind.

### Aufgabe und Lösung

Aufgabe der Erfindung ist es, ein Verfahren und eine Vorrichtung zu dessen Durchführung zur Verfügung zu stellen, die die Nachteile aus dem Stand der Technik mindern oder beseitigen.

Erfindungsgemäß wird dies bezüglich des Verfahrens dadurch erreicht, dass in einer Y-Richtung voneinander beabstandete Haltebereiche des sich in X-Richtung und Y-Richtung erstreckenden flexiblen Flächengebildes durch Beaufschlagung mit einer in Y-Richtung wirkenden vorgegebenen Vorspannkraft voneinander beabstandet werden, wodurch ein Vorspannzustand erzielt wird. Anschließend werden in einem Weiterverarbeitungszustand, der dem Vorspannzustand oder einem gegenüber dem Vorspannzustand um eine vorzugsweise vorgegebene Entlastungsstrecke in Y-Richtung entlasteten Vorspannzustand entspricht, insbesondere parallel zueinander sich in X-Richtung erstreckende und in Y-Richtung voneinander beabstandete Führungsmittel am Flächengebilde befestigt.

Durch die in Y-Richtung wirkende Vorspannkraft wird das Flächengebilde demzufolge gedehnt, wobei bereits ein Zustand hergestellt wird, der in etwa der späteren Einbausituation im Fahrzeug entspricht. Die Vorspannkraft entspricht daher vorzugsweise der später im Fahrzeug herrschenden Spannkraft im Flächengebilde. Die Dehnungsstrecke, um die das Flächengebilde zu diesem Zweck gedehnt wird, ist nicht fest vorgegeben. Sie ergibt sich in Abhängigkeit der Beschaffenheit des Flächengebildes, insbesondere also seines E-Moduls, sowie in Abhängigkeit der aufgebrachten Vorspannkraft.

Nachdem der Vorspannzustand erreicht wurde, folgt anschließend im gespannten Zustand die Befestigung der Führungsmittel in einer vorgegebenen Beabstandung zueinander, vorzugsweise in einer Beabstandung, die der Beabstandung in der Einbausituation im Fahrzeug entspricht oder um die Entlastungsstrecke gegenüber dieser verringert ist.

Im einfachsten Fall kann dies in einem Weiterverarbeitungszustand geschehen, der dem zuvor erreichten Vorspannzustand entspricht. Besonders bevorzugt ist es jedoch, wenn dieser Weiterverarbeitungszustand vom Vorspannzustand insoweit abweicht, als dass er um eine vorzugsweise vorgegebene Entlastungsstrecke entlastetet ist. Die sich in Abhängigkeit der oben genannten Randfaktoren ergebende Beabstandung der Haltebereiche im Vorspannzustand wird demnach bei dieser Variante um die Entlastungsstrecke reduziert. Diese Entlastung ist vorteilhaft, da im verringerten Spannungszustand eine Befestigung der Führungsmittel am Flächengebilde in Abhängigkeit der Art der Befestigung leichter und qualitativ besser möglich ist. Dies gilt insbesondere, wenn die Befestigung mittels einer Klebeverbindung erfolgt, da es in einem solchen Fall durch die Entlastung möglich ist, die Führungsmittel in einem weniger gespannten Zustand des Flächengebildes anzukleben, was der Haltbarkeit der Klebeverbindung zugute kommt. Neben der Befestigung durch Kleben können aber auch andere Befestigungsmethoden verwendet werden. Beispielsweise können die Führungsmittel vernäht oder mittels Nieten am flexiblen Flächengebilde befestigt werden.

Unter einer vorgegebenen Kraft oder einer vorgegebenen Strecke wird im Zusammenhang mit dieser Erfindung eine Kraft bzw. eine Strecke verstanden, die während des Bearbeitungsprozesses typgleicher Flächengebilde immer einheitlich ist. Die vorgegebenen Kräfte bzw. Strecken werden demnach nicht in Abhängigkeit spezifischer Eigenschaften des Flächengebildes angepasst.

Die Führungsmittel selbst können auf verschiedenste Art und Weise ausgebildet sein. Ihre wesentliche Eigenschaft ist, dass sie mit fahrzeugfesten Führungsmitteln derart zusammenwirken können, dass sie ein Randbereich des Flächengebildes fahrzeugfest festlegen. So können die Führungsmittel beispielsweise zwei Führungsstreifen umfassen, wobei einer der Führungsstreifen rechtseitig und einer der Führungsstreifen linksseitig des zu überspannenden Bereichs in eine fahrzeugfeste Führungsnut eingefügt werden.

Das Verfahren wird vorzugsweise als diskretes Verfahren durchgeführt, bei dem ein in X-Richtung begrenztes Flächengebilde über seine gesamte Länge in Y-Richtung mit einer weitgehend einheitlichen Vorspannkraft beaufschlagt wird. Die Länge dieses Flächengebildes in X-Richtung entspricht vorzugsweise der Länge des Flächengebildes für ein einzelnes Fahrzeug. Denkbar ist jedoch auch, dass die Länge ausreichend groß für mehrere Fahrzeuge gewählt wird und dass das Flächengebilde in X-Richtung erst nach der Befestigung der Führungsmittel in kleinere Teilabschnitte unterteilt wird. Neben dieser Ausbildung des Verfahrens als diskretes Verfahren sind auch Ausgestaltungen als kontinuierliches oder teildiskretes Verfahren möglich. Bei der Durchführung des Verfahrens als kontinuierliches Verfahren handelt es sich bei dem Flächengebilde um ein in X-Richtung zunächst nicht begrenztes Flächengebilde, also ein Endlosflächengebilde. Dieses wird bei einem kontinuierlichen Durchlaufen durch eine Vorrichtung, die zur Durchführung des Verfahrens geeignet ist, zunächst mit der vorgegebenen Vorspannkraft vorgespannt und dann im weiteren Verlauf mit den Führungsmitteln versehen. Während bei der Ausgestaltung als rein kontinuierliches Verfahren somit auch die Führungsmittel als Endlosführungsmittel aufgebracht werden, werden sie bei einem teildiskreten Verfahren in Abschnitten aufgebracht, die vorzugsweise der Länge der für ein Fahrzeug erforderlichen Abschnitte entspricht.

Bei einer Weiterbildung des Verfahrens wird in einem zusätzlichen Schritt vor dem Schritt der Kraftbeaufschlagung mit der vorgegebenen Vorspannkraft das flexible Flächengebilde mit einer gegenüber der Vorspannkraft größeren Überdehnungskraft in Y-Richtung beaufschlagt. Diese Überdehnungskraft sorgt dafür, dass fertigungs- und transportbedingte Störungen im textilen Flächengebilde entfernt werden. Durch die Überdehnungskraft werden insbesondere die Maschen von textilen Flächengebilden auseinander gezogen und etwaige sich im Gewebe noch befindende Schlaufen und ähnliches werden gerade gezogen. Durch die Überdehnungskraft wird demnach eine besonders einheitliche Ausgangssituation für die nachfolgenden Schritte hergestellt. Die Kraftbeaufschlagung durch die Überdehnungskraft erfolgt vorzugsweise durch die gleichen Mittel, die im späteren Verlauf des Verfahrens auch für die Kraftbeaufschlagung mit der Vorspannkraft verantwortlich sind. Diese Weiterbildung des Verfahrens ist daher in Hinblick auf die Vorrichtung preisgünstig und bedarf keines großen Mehraufwandes.

Bei einer Weiterbildung des Verfahrens ist das Flächengebilde während der Beaufschlagung mit der Vorspannkraft im Bereich der Haltebereiche jeweils durch ein Haltemittel gehalten, wobei diese Haltemittel Teil einer separat handhabbaren gemeinsamen Haltevorrichtung sind. Dabei wird vor der Kraftbeaufschlagung mit der Vorspannkraft das Flächengebilde in die Haltevorrichtung eingelegt und die Haltemittel in einen Haltezustand versetzt. Weiterhin wird vor der Kraftbeaufschlagung mit der Vorspannkraft die Haltevorrichtung auf einer zur Aufbringung der Vorspannkraft ausgebildeten Belastungsvorrichtung aufgelegt und vorzugsweise an diese gekoppelt. Diese Weiterbildung des Verfahrens erlaubt die Durchführung des Verfahrens in einer hinsichtlich des Aufwandes besonders vorteilhaften Art und Weise. Die Haltevorrichtung, die von der Belastungsvorrichtung getrennt ausgebildet ist und an diese bloß fallweise angekoppelt wird, kann in nachfolgenden Verfahrensschritten im Rahmen der Herstellung oder Nachbearbeitung des Flächengebildes auch im Zusammenspiel mit anderen Vorrichtungen als der Belastungsvorrichtung verwendet werden. Das Einlegen des Flächengebildes in die Haltevorrichtung erfolgt nicht zwingend, bevor die Haltevorrichtung auf die Belastungsvorrichtung aufgelegt wird. Gleichermaßen ist es auch denkbar und von dieser Weiterbildung umfasst, dass die Haltevorrichtung zuerst mit der Belastungsvorrichtung verbunden bzw. an diese angekoppelt wird und erst nachfolgend das Einlegen des Flächengebildes erfolgt.

Unter dem Auflegen der Haltevorrichtung auf die Belastungsvorrichtung ist ein Verbinden der Haltevorrichtung mit der Belastungsvorrichtung zu verstehen, welches die Haltevorrichtung zumindest insoweit auf der Belastungsvorrichtung festlegt, dass die Haltemittel bei einer durch die Belastungsvorrichtung ausgeübten Belastung, die die Haltemittel aufeinander drückt, der Bewegung der Belastungsvorrichtung folgen. Insbesondere bevorzugt ist es jedoch, wenn die Haltevorrichtung nicht nur auf die Belastungsvorrichtung aufgelegt, sondern auch an dieser angekoppelt wird, wobei unter dem Ankoppeln eine Festlegung der Haltevorrichtung auf der Belastungsvorrichtung angesehen wird, die zumindest noch in einer von der Y-Richtung abweichenden Richtung eine Verbindung zwischen Belastungsvorrichtung und Haltevorrichtung schafft. Insbesondere kann dies durch Haltekrallen, Verbindungsstifte oder ähnliche Verbindungsmittel geschehen, die nach dem Auflegen der Haltevorrichtung auf die Belastungsvorrichtung derart verschwenkt oder verschoben werden, dass sie formschlüssig die Haltevorrichtung an die Belastungsvorrichtung koppeln.

Besonders bevorzugt ist eine Weiterbildung des Verfahrens, bei der nach Erreichen des Weiterverarbeitungszustandes die Beabstandung der Haltemittel durch Fixiermittel fixiert wird, die von den kraftaufbringenden Mitteln zur Erreichung des Vorspannzustandes unterschiedlich sind. Diese Fixiermittel gestatten es, den Weiterverarbeitungszustand zu fixieren, ohne dass hierfür die kraftaufbringenden Mittel weiterhin in ihrem Spannzustand verbleiben müssen. Insbesondere bei einer Ausgestaltung, bei der die kraftaufbringenden Mittel Teil einer Belastungsvorrichtung sind, kann durch zusätzliche Fixiermittel erreicht werden, dass die Haltevorrichtung mit den Fixiermitteln von der Belastungsvorrichtung entkoppelbar ist, ohne das hierdurch der hergestellte Weiterverarbeitungszustand verloren geht.

Bei einer Weiterbildung des Verfahrens erfolgt besagte Trennung der Haltevorrichtung von der Belastungsvorrichtung nach Erreichen des Weiterverarbeitungszustandes. Dies gestattet es zum einen, die Belastungsvorrichtung unmittelbar für das nächste in den Vorspannzustand zu vorzuspannende Flächengebilde freizugeben, und andererseits, dass in den Weiterverarbeitungszustand gebrachte Flächengebilde auf einer nächsten Arbeitsstation weiterzuverarbeiten, insbesondere es mit den Führungsmitteln zu versehen.

Insbesondere zur Durchführung des oben beschriebenen Verfahrens betrifft die Erfindung darüber hinaus die oben beschriebene gattungsgemäße Vorrichtung zur Vorbereitung eines flexiblen Flächengebildes. Diese Vorrichtung umfasst erfindungsgemäß zwei Halteanordnungen, die zur Festlegung eines sich in einer X-Richtung und einer Y-Richtung erstreckenden Flächengebildes ausgebildet sind, wobei die Halteanordnungen derart in Y-Richtung beabstandet sind, dass durch sie das Flächengebilde an zwei parallelen und sich gegenüberliegenden Randbereichen festlegbar ist. Die Vorrichtung umfasst weiterhin Belastungsmittel, mittels derer die Beabstandung der beiden Halteanordnungen zuein-ander zumindest abschnittsweise verändert werden kann. Weiterhin ist vorgesehen, dass die Vorrichtung mindestens zwei voneinander bei der bestimmungsgemäßen Verwendung der Vorrichtung verbindbare und trennbare Baugruppen aufweist, wobei eine Rahmenbaugruppe die Halteanordnungen und vorzugsweise die Fixiermittel umfasst und wobei eine Basisbaugruppe die Belastungsmittel umfasst. Die Basisbaugruppe und die Rahmenbaugruppe sind derart aufeinander abgestimmt, dass die Rahmenbaugruppe durch Auflegen auf die Basisbaugruppe in einer von der Y-Richtung abweichenden Richtung bezüglich der Y-Richtung formschlüssig mit der Basisbaugruppe verbindbar ist.

Die erfindungsgemäße Vorrichtung gestattet es demnach, zum Zwecke der Herstellung beispielsweise eines Beschattungssystems das Flächengebilde zunächst in einem ungespannten Zustand in den parallelen Randbereichen festzulegen und diese Randbereiche dann voneinander zu beabstanden, so dass eine Vorspannung im flexiblen Flächengebilde in Y-Richtung erzeugt wird. Die Halteanordnungen sind dabei vorzugsweise als Klemmanordnungen ausgebildet, die unkompliziert zu öffnen und zu schließen sind und so ein schnelles Einspannen und Ausspannen des Flächengebildes gestatten. Die Belastungsmittel sind so ausgestaltet, dass sie eine vorgegebene Dehnkraft aufbringen können. Sie sind dabei dafür geeignet, wegunabhängig diese Dehnkraft aufzubringen, so dass das Flächengebilde gespannt wird, bis diese Dehnkraft erreicht ist. Sie erlaubt es dadurch, nach Vorgabe dieser Dehnkraft das Flächengebilde soweit zu dehnen, bis die Spannung im Flächengebilde die vorgegebene Dehnkraft erreicht. Die Halteanordnungen, die vorzugsweise zum Klemmen des Flächengebildes ausgebildet sind, erstrecken sich vorzugsweise durchgehend in X-Richtung, so dass das Flächengebilde über eine längere Strecke, beispielsweise mindestens 200mm, linienförmig in den Randbereichen gehalten wird. Alternativ hierzu können die Halteanordnungen auch für ein nur punktuelles Halten ausgebildet sein, wobei in einem solchen Fall jede Halteanordnung in X-Richtung beabstandete Haltepunkte zugeordnet sind, vorzugsweise Haltepunkte, die maximal um 200mm, vorzugsweise um maximal 100mm voneinander beabstandet sind, wobei mindestens drei solche Haltepunkte zueinander fluchtend je Halteanordnung vorgesehen sind.

Die erfindungsgemäße Trennung in verschiedene Baugruppen erlaubt eine besonders flexible Verwendung. Unter der Trennung in die genannten Baugruppen gemäß dieser Weiterbildung ist zu verstehen, dass die Rahmenbaugruppe und die Basisbaugruppe so ausgebildet sind, dass sie im Rahmen der bestimmungsgemäßen Verwendung zur Bearbeitung eines Flächengebildes verbunden und getrennt werden können. Sie sind dabei derart aufeinander abgestimmt, dass vorzugsweise mittels lediglich eines Auflegens oder zumindest eines werkzeuglosen Verbindens eine Verbindung zwischen den Baugruppen geschaffen werden kann, durch die die Übertragung von von dem Belastungsmitteln ausgeübten Beabstandungskräften auf die Halteanordnungen möglich ist.

Durch das Abstimmung der Basisbaugruppe und der Rahmenbaugruppe in Hinblick auf ein formschlüssiges Zusammenwirken ist ein schneller Wechsel der Rahmenbaugruppe möglich, da hierdurch die Rahmenbaugruppe durch schlichtes Anheben von der Basisbaugruppe getrennt werden kann und eine andere Rahmenbaugruppe oder die gleiche Rahmenbaugruppe nachfolgend durch schlichtes Auflegen mit der Basisbaugruppe verbunden werden kann. Unter einer in Y-Richtung formschlüssigen Verbindung wird dabei angesehen, dass die Verbindung dergestalt ist, dass eine Kraftbeaufschlagung der Halteanordnungen durch die Belastungsmittel unmittelbar nach Auflegen der Rahmenbaugruppe auf die Basisbaugruppe möglich ist. Vorzugsweise ist die in Y-Richtung formschlüssige Verbindung zweiseitig wirksam, so dass sowohl eine Verkürzung des Abstandes zwischen den Halteanordnungen als auch eine Vergrößerung des Abstandes zwischen Halteanordnungen durch die Belastungsmittel sicher und reproduzierbar möglich ist.

Besonders bevorzugt ist es, wenn die Vorrichtung über Fixiermittel verfügt, mittels derer eine Beabstandung der Halteanordnungen variabel fixierbar ist. Diese variable Fixierung mittels der Fixiermittel erlaubt, nach Erreichen einer sich bei der vorgegebenen Dehnkraft einstellenden und nicht vorgegebenen Beabstandung der Halteanordnungen, diesen Zustand zu konservieren. Die Belastungsmittel können beim Vorhandensein solche Fixiermittel nach deren Fixierung gelöst werden, ohne dass der erreichte Beabstandungszustand der Halteanordnungen hierdurch verloren geht. Insbesondere erlauben es die Fixiermittel, die Halteanordnungen nach Erreichen der gewünschten Beabstandung von den Belastungsmitteln zu trennen.

Bei einer Weiterbildung der Erfindung sind Kopplungsmittel vorgesehen, mittels derer die Rahmenbaugruppe mit der Basisbaugruppe koppelbar ist. Unter diesen Kopplungsmitteln werden Verbindungsmittel verstanden, die nicht nur eine Verbindung in Y-Richtung schaffen, sondern vorzugsweise in allen drei Raumrichtungen, zumindest jedoch in X-Richtung und Y-Richtung die Rahmenbaugruppe mit der Basisbaugruppe verbinden. Auch wenn in oben beschriebener Art und Weise eine Gestaltung denkbar ist und zweckmäßig sein kann, bei der das reine Auflegen der Rahmenbaugruppe ausreicht, so ist durch die zusätzliche Verbindung mittels der Kopplungsmittel ein erhöhtes Maß an Sicherheit erreichbar.

Bei einer Weiterbildung der Erfindung sind die Fixiermittel derart ausgebildet, dass sie beim Verbinden der Rahmenbaugruppe mit der Basisbaugruppe automatisch entriegelt werden. Durch diese automatische Entriegelung werden die Fixiermittel unmittelbar wieder in einen Zustand gebracht, den sie vor der Kraftbeaufschlagung mittels der Belastungsmittel einnehmen sollen. Eine separate Entriegelung kann somit entfallen.

Bevorzugt ist es, dass die Fixiermittel als druckgesteuerte Fixiermittel ausgebildet sind, wobei Steuermittel zur Steuerung des anliegenden Mediendrucks vorzugsweise in der Basisbaugruppe angeordnet sind. Die Gestaltung der Fixiermittel als druckgesteuerte Fixiermittel erlaubt eine besonders einfache Gestaltung. Der zur Steuerung der Fixiermittel aufgebrachte Druck wird vorzugsweise von einer externen Quelle gespeist. Besonders bevorzugt ist eine Steuerung hydraulischer oder pneumatischer Natur. Insbesondere zweckmäßig ist es, wenn die Fixiermittel derart ausgebildet sind, dass sie einen Fixierzustand einnehmen, wenn der Mediendruck gering oder 0 ist und bei hohem Mediendruck einen gelösten Zustand einnehmen. Dies ermöglicht es, die Fixiermittel so auszugestalten, dass kein Druck anliegen muss, wenn die Rahmenbaugruppe von der Basisbaugruppe getrennt wird. Vorzugsweise sind in der Basisbaugruppe zusätzlich Steuermittel zur Steuerung des Mediendrucks vorgesehen, die es gestatten, den Mediendruck nach Erreichen des Weiterverarbeitungszustandes zu senken und damit den Fixierzustand herzustellen.

Bei einer Weiterbildung der Erfindung ist ein Wegmesser und/oder ein Kraftmesser vorgesehen, wobei der Wegmesser zur Messung der Beabstandung der beiden Halteanordnungen ausgebildet ist und der Kraftmesser zur Messung der in Y-Richtung auf das Flächengebilde wirkenden Kraft ausgebildet ist. Während die bestimmungsgemäße Funktion der Vorrichtung bereits dadurch gewährleistet werden kann, dass die Belastungsmittel lediglich steuernd und somit ohne geschlossenen Regelkreis angesprochen werden, kann durch einen zusätzlichen Kraftmesser ein geschlossener Regelkreis hergestellt werden, durch den eine besonders reproduzierbare Art der Kraftbeaufschlagung möglich ist. Insbesondere können die Belastungsmittel in einem solchen Fall sehr einfach ausgebildet sein, da sie nicht unmittelbar zur Herstellung der vorgegebenen Vorspannkraft geeignet sein müssen, sondern es ausreicht, dass sie eine variable Beabstandung der Halteanordnungen realisieren können. Diese Beabstandung kann dann in Abhängigkeit der anliegenden Kraft solange erhöht werden, bis die anliegende Kraft der vorgegebenen Vorspannkraft entspricht. Das Vorsehen eines Wegmessers ist insbesondere von Vorteil, um das eingespannte Flächengebilde nach Erreichen der vorgegebenen Vorspannung um eine vorgegebene Strecke entspannen zu können. Hierzu wird die Beabstandung bei Erreichen der vorgegebenen Vorspannung registriert. Anschließend wird die durch die Belastungsmittel aufgebrachte Kraft soweit reduziert, bis sich diese Beabstandung um eine vorgegebene Entlastungsstrecke reduziert hat.

Zur Steuerung der Vorrichtung ist vorzugsweise ein Steuergerät vorgesehen, welches zur Abgabe von Ausgangssignalen und/oder zum Empfang von Eingangssignalen ausgebildet ist, die zur Durchführung des oben beschriebenen Verfahrens erforderlich sind.

### Kurzbeschreibung der Zeichnungen

Weitere Merkmale und Vorteile der Erfindung ergeben sich außer aus den Ansprüchen auch aus der nachfolgenden Beschreibung eines bevorzugten Ausführungsbeispiels der Erfindung. Dieses Ausführungsbeispiel ist anhand verschiedener Stadien bei der Durchführung des erfindungsgemäßen Verfahrens dargestellt. Dabei zeigen:
- Fig. 1: eine Rahmenbaugruppe und ein in die Rahmenbaugruppe einspannbares flexibles Flächengebilde,
- Fig. 2: die Rahmenbaugruppe der Fig. 1 mit eingespanntem Flächengebilde vor dem Einsetzen in eine Basisbaugruppe,
- Fig. 3: eine Ausgangslage nach Einsetzen der Rahmenbaugruppe in die Basisbaugruppe,
- Fig. 4: die Gesamtvorrichtung nach Herstellen eines Überdehnungszustandes im Flächengebilde,
- Fig. 5: die Gesamtvorrichtung nach Herstellen eines Vorspannzustandes im Flächengebilde,
- Fig. 6: die Gesamtvorrichtung nach Herstellen eines entspannten Vorspannzustandes und Fixierung dieses Zustandes,
- Fig. 7: einen Zustand nach Abheben der Rahmenbaugruppe von der Basisbaugruppe und
- Fig. 8: die Rahmenbaugruppe in einer nachfolgenden Arbeitsstation, an der Führungsmittel am Flächengebilde befestigt werden.

### Detaillierte Beschreibung des Ausführungsbeispiels

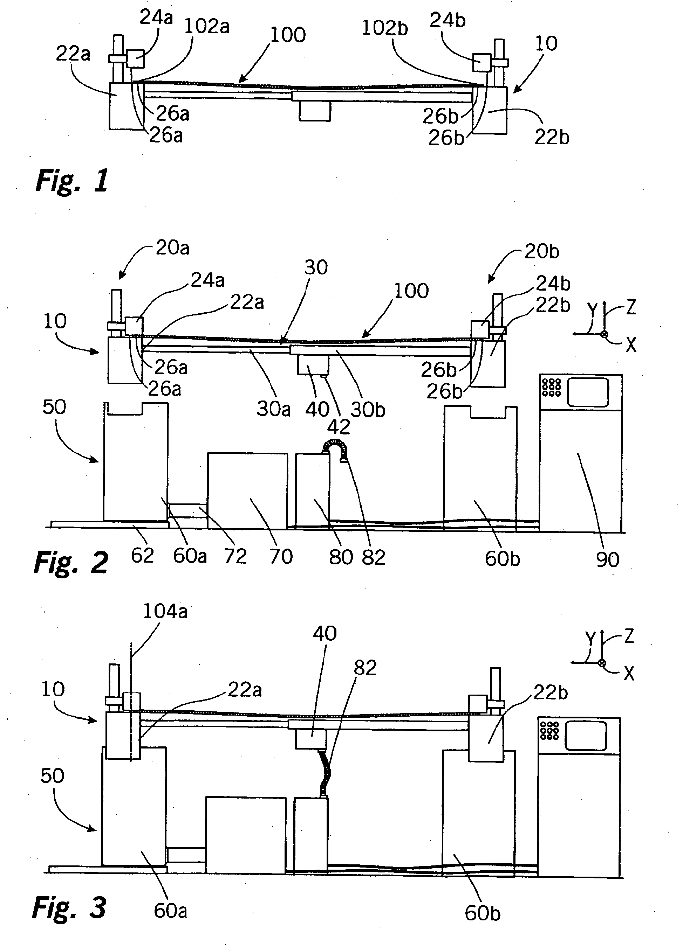

Vor der Beschreibung des Verfahrensablaufs sollen zunächst anhand der Figur 2 die einzelnen zur Durchführung des Verfahrens erforderlichen Komponenten der Vorrichtung erläutert werden.

Die Vorrichtung besteht aus zwei Baugruppen, einer Rahmenbaugruppe 10 sowie einer Basisbaugruppe 50. Die Rahmenbaugruppe 10 weist zwei sich parallel zueinander erstreckende Halteanordnungen 20a, 20b auf, die sich jeweils in X-Richtung erstrecken und die jeweils einen Klemmbalken 22a, 22b und eine in Z-Richtung gegenüber dem Klemmbalken 22a, 22b verschiebbare Klemmleiste 24a, 24b aufweisen. Die Klemmbalken 22a, 22b und die jeweils zugeordneten Klemmschienen 24a, 24b erstrecken sich ebenfalls in X-Richtung und weisen jeweils aufeinander zugerichtete Klemmflächen 26a, 26b auf. Die Halteanordnungen 20a, 20b sind miteinander über sich in Y-Richtung erstreckende Verbindungsrohrvorrichtungen 30 miteinander verbunden. Die Verbindungsrohrvorrichtungen 30 bestehen jeweils aus teleskopierbaren Rohren 30a, 30b und erlauben eine variable Beabstandung der Halteanordnungen voneinander, wobei mittels einer Druckluftbremse 40 ein beliebiger zuvor erreichter Beabstandungszustand fixiert werden kann.

Die Basisvorrichtung 50 weist zwei Auflageblöcke 60a, 60b auf die zur Aufnahme der Halteanordnungen 20a, 20b ausgebildet sind. Während der rechte Auflageblock 60b ortsfest auf einem Hallenboden 52 steht ist der linke Auflageblock 60a in Y-Richtung verschiebbar ausgebildet. Zu diesem Zweck ist auf dem Hallenboden 52 eine Lagerplatte 62 angeordnet, welche in nicht näher dargestellter Art und Weise gemeinsam mit einer Unterseite des Auflageblocks 60a ein Linearlager bildet. Zur Steuerung der Position des Auflageblocks 60a ist eine ortsfeste Belastungsvorrichtung 70 vorgesehen, die über ein Gestänge 72 mit dem Auflageblock 60a verbunden ist. Dieses Gestänge 72 kann über die Belastungsvorrichtung 70 in Y-Richtung translativ bewegt werden, wodurch eine Bewegung des Auflageblocks 60a verursacht werden kann.

Als weitere Komponenten weist die Basisbaugruppe 50 eine Druckluftquelle 80 auf, die über einen Schlauch 82 mit der Druckluftbremse 40 der Rahmenbaugruppe verbindbar ist. Des Weiteren ist ein Steuergerät 90 vorgesehen, welches unter anderem die Steuerung der Druckluftquelle 80 und der Belastungsvorrichtung 70 übernimmt.

Zum Verfahrensablauf: Wie in Figur 1 dargestellt ist, wird ein sich in X-Richtung und Y-Richtung erstreckendes Flächengebilde 100 zunächst in die zu diesem Zeitpunkt noch von der Basisbaugruppe getrennte Rahmenbaugruppe 10 eingelegt, sodass es sich bis in den Bereich der Klemmflächen 26a, 26b der Halteanordnungen 20a, 20b erstreckt. Anschließend werden die Klemmleisten 24a, 24b abgesenkt, sodass die Ränder 102a, 102b des Flächengebildes 100 zwischen den Klemmflächen 26a, 26b der Klemmbalken 22a, 22b und der Klemmleisten 24a, 24b festgespannt werden. Zu diesem Zeitpunkt ist das Flächengebilde 100 noch in einem ungespannten Zustand. Dies ist der Zustand, der in Fig. 2 dargestellt ist.

In diesem Zustand wird die gesamte Rahmenbaugruppe 10 mitsamt dem Flächengebilde 100 in die Basisbaugruppe 50 eingesetzt, sodass die Klemmbalken 22a, 22b jeweils in Y-Richtung formschlüssig in den Auflageblöcken 60a, 60b fixiert sind. Anschließend wird der Druckluftschlauch 82 mit der Druckluftbremse 40 verbunden, welche zu diesem Zweck an ihrer Unterseite eine Anschlussvorrichtung 42 bietet. Der hierdurch erreichte Zustand ist in der Figur 3 dargestellt. Zum besseren Verständnis der nachfolgenden Schritte ist die Lage 104a der linken Kante des Flächengebildes 100 in diesem Zustand in Fig. 3 gekennzeichnet.

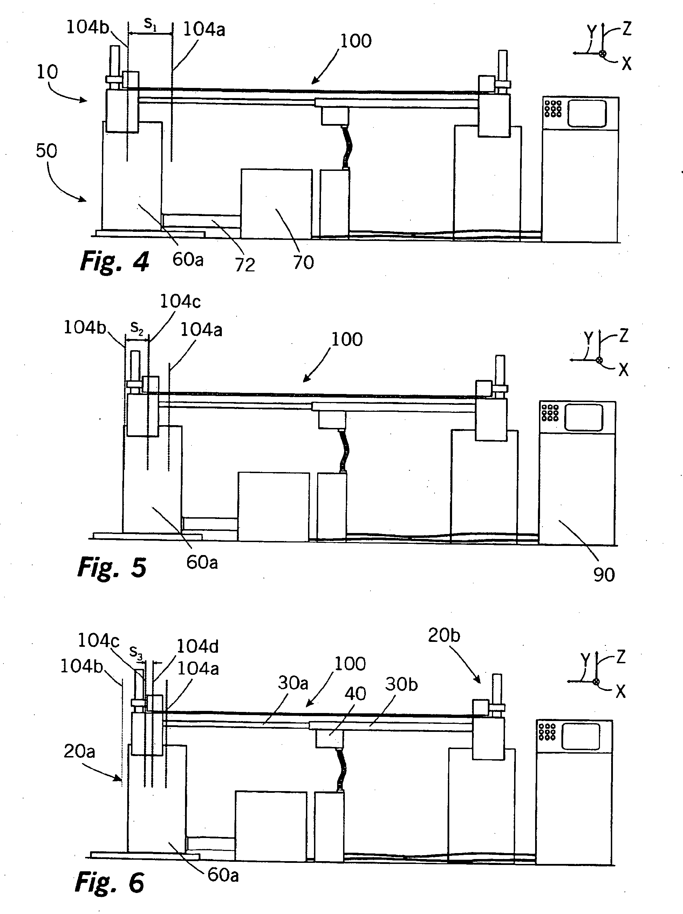

Ausgehend vom Zustand der Figur 3, in dem die Basisbaugruppe 50 und die Rahmenbaugruppe 10 sich bezogen auf die Y-Richtung in einem verkoppelten Zustand befinden, wird, wie in Figur 4 dargestellt ist, eine Verschiebung des linken Auflageblocks 60a vorgenommen. Zu diesem Zweck wird das Gestänge 72 kontinuierlich aus der Belastungsvorrichtung 70 herausgefahren, wobei dies entweder bis zu einer vorgegebenen Überdehnungsposition oder bis zu einer vorgegebenen Überdehnungskraft erfolgen kann. Durch die Verschiebung des Auflageblocks 60a wird auch die Beabstandung der Halteanordnungen 20a, 20b vergrößert und damit eine Dehnung des Flächengebildes 100 bewirkt. Die vergrößerte Beabstandung ist anhand der Lage 104b der linken Kante des Flächengebildes 100 zu erkennen. Das Maß der Verlagerung ist mit s₁ gekennzeichnet. Die starke Dehnung des Flächengebildes 100 führt dazu, dass das Flächengebilde 100 in einen sehr homogenen Zustand gerät, da die Maschen des textilen Flächengebildes 100 in Y-Richtung auseinander gezogen werden, sodass ungewollte Garnschlingen und ähnliches beseitigt werden.

Ausgehend von dem Überdehnungszustand der Figur 4 wird der Auflageblock 60a anschließend zurück in Richtung seiner Ausgangsstellung verfahren, wobei diese Bewegung dann endet, wenn eine vorgegebene Vorspannkraft F_{V} an das Flächengebilde angelegt wurde. Die Vorspannkraft F_{V} entspricht der Dehnkraft, die im eingebauten Zustand im Flächengebilde 100 in Y-Richtung herrschen soll. Die Distanz s₂, um die der Auflageblock 60a zwischen dem Zustand der Figur 4 und dem dann erreichten Zustand der Figur 5 zurückgefahren wird, ist nicht festgelegt, sondern hängt lediglich davon ab, wann diese Vorspannkraft F_{V} im Flächengebilde 100 vorliegt. Sobald dieser Zustand der Figur 5 und die damit einhergehende Lage 104c des linken Randes des Flächengebildes 100 erreicht ist, wird die Position des Auflageblocks 60a durch das Steuergerät 90 ermittelt und nachfolgend der Auflageblock 60a um eine vorgegebene Entlastungsstrecke S₃ weiter nach links verschoben, bis der linke Rand des Flächengebildes die Lage 104d erreicht hat. Auch in diesem Zustand steht das Flächengebilde 100 noch unter Zugspannung in Y-Richtung.

In dem dadurch erreichten entlasteten Vorspannzustand, der in Figur 6 dargestellt ist, wird der an der Luftdruckbremse 40 anliegende Luftdruck gesenkt, wodurch die Luftdruckbremse die gegeneinander teleskopierbaren Rohre 30a, 30b des Verbindungsrohrs 30 zwischen den Halteanordnungen 20a, 20b gegeneinander fixiert.

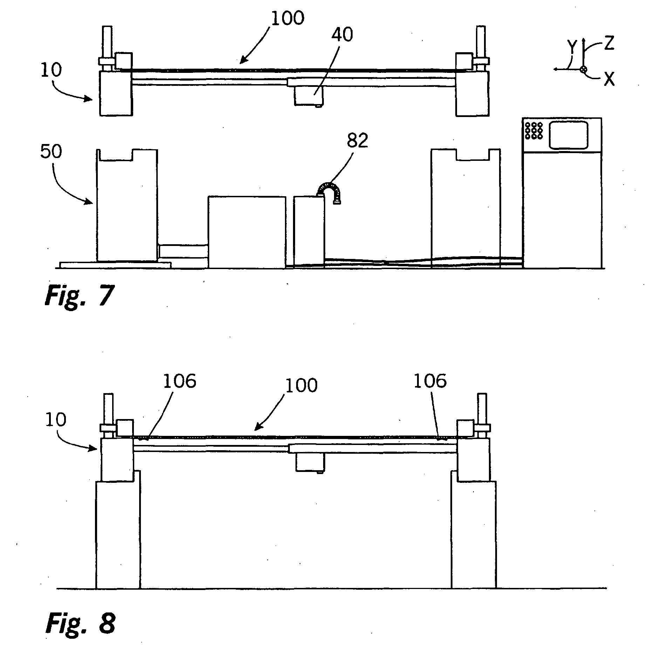

Anschließend kann, wie in Figur 7 dargestellt ist, die Druckluftzufuhr zur Bremsvorrichtung 40 dadurch endgültig unterbrochen werden, dass der Schlauch 82 von der Druckluftbremse 40 entfernt wird. Nachfolgend wird die Rahmenbaugruppe 10 durch Anheben in Z-Richtung wieder von der Basisbaugruppe 50 getrennt. Das eingespannte Flächengebilde 100 verbleibt in einem Zustand, der gegenüber dem Einbauzustand in einem Fahrzeug um die vorgegebene Entlastungsstrecke s₃ entspannt ist. Dieser Zustand wird durch die Rahmenbaugruppe 10 selbstständig aufrechterhalten, da die Druckluftbremse 40 aufgrund des fehlenden Luftdrucks im blockierenden Zustand verharrt.

Zur nachfolgenden Aufbringung, insbesondere Verklebung, von Führungsleisten 106 wird die Rahmenbaugruppe 10 auf eine nicht im Detail beschriebene zweite Basisbaugruppe aufgesetzt. Die Führungsmittel 106 werden in einem Abstand zueinander angebracht, der um die Entlastungsstrecke s₃ gegenüber der Beabstandung im eingebauten Zustand vermindert ist. Durch die leichte Entlastung des Flächengebildes 100 kann eine besonders stabile und beständige Klebeverbindung zwischen dem Flächengebilde 100 und den Führungsschienen 106 erzielt werden.

Die Darstellung der Vorrichtung ist nur als schematische Darstellung zu begreifen. Die Größen der einzelnen Bauteile, insbesondere die Dehnungsmaße des Flächengebildes, sind zur Verdeutlichung unverhältnismäßig groß dargestellt.

## Patentansprüche

1. Verfahren zur Anbringung von Führungsmitteln (106) an einem flexiblen Flächengebilde (100), vorzugsweise als Teil eines Beschattungssystems für ein Fahrzeug,
**gekennzeichnet durch** die Schritte:
- In einer Y-Richtung voneinander beabstandete Haltebereiche (102a, 102b) eines sich in einer X-Richtung und einer Y-Richtung erstreckenden flexiblen Flächengebildes (100) werden **durch** Beaufschlagung mit einer in Y-Richtung wirkenden vorgegebenen Vorspannkraft (F_{V}) voneinander beabstandet, wodurch ein Vorspannzustand erzielt wird.
- In einem Weiterverarbeitungszustand, der dem Vorspannzustand oder einem gegenüber dem Vorspannzustand um eine vorgegebene Entlastungsstrecke (S₃) in Y-Richtung entlasteten Vorspannzustand entspricht, werden sich in X-Richtung erstreckende und in Y-Richtung voneinander beabstandete Führungsmittel (106) am Flächengebilde (100) befestigt.

2. Verfahren nach Anspruch 1,
**gekennzeichnet durch**
einen zusätzlichen Schritt vor dem Schritt der Kraftbeaufschlagung mit der vorgegebenen Vorspannkraft (F_{V}):
- Das flexible Flächengebilde wird mit einer gegenüber der Vorspannkraft (F_{V}) größeren Überdehnungskraft in Y-Richtung beaufschlagt.

3. Verfahren nach Anspruch 1 oder 2,
**dadurch gekennzeichnet, dass**
das Flächengebilde während der Beaufschlagung mit der Vorspannkraft (F_{V}) im Bereich der Haltebereiche (102a, 102b) jeweils durch ein Haltemittel (20a, 20b) gehalten ist und diese Haltemittel (20a, 20b) Teil einer separat handhabbaren gemeinsamen Haltevorrichtung (10) sind, wobei folgende zusätzliche Schritte vorgesehen sind:
- Vor der Kraftbeaufschlagung mit der Vorspannkraft (F_{V}) wird das Flächengebilde (100) in die Haltevorrichtung (10) eingelegt und die Haltemittel (20a, 20b) in einen Haltezustand versetzt.
- Die Haltevorrichtung (10) wird auf einer zur Aufbringung der Vorspannkraft (F_{V}) ausgebildeten Belastungsvorrichtung (50) aufgelegt und vorzugsweise an diese gekoppelt.

4. Verfahren nach einem der vorstehenden Ansprüche,
**gekennzeichnet durch**
den folgenden zusätzlichen Schritt:
- Nach Erreichen des Weiterverarbeitungszustandes wird die Beabstandung der Haltemittel (20a, 20b) **durch** Fixiermittel (40) fixiert, die von den kraftaufbringenden Mitteln (70) zur Erreichung des Vorspannzustandes unterschiedlich sind.

5. Verfahren nach einem der Ansprüche 3 bis 4,
**gekennzeichnet durch**
den folgenden zusätzlichen Schritt:
- Nach Erreichen des Weiterverarbeitungszustandes wird die Haltevorrichtung (10) von der Belastungsvorrichtung (50) getrennt, wobei sie vorzugsweise zuvor entkoppelt wird.

6. Vorrichtung zur Vorbereitung eines flexiblen Flächengebildes (100) zur Anbringung von Führungsmitteln (106), insbesondere im Rahmen der Herstellung eines Beschattungssystems für ein Fahrzeug, wobei die Vorrichtung zur Durchführung des Verfahrens nach einem der Ansprüche 1 bis 5 ausgebildet ist,
mit
- zwei Halteanordnungen (20a, 20b), die zur Festlegung eines sich in einer X-Richtung und einer Y-Richtung erstreckenden Flächengebildes (100) ausgebildet sind, wobei die Halteanordnungen (20a, 20b) derart in Y-Richtung beabstandet sind, dass das Flächengebilde (100) an zwei Randbereichen (102a, 102b) festlegbar ist, und
- Belastungsmitteln (70), mittels derer die Beabstandung der beiden Halteanordnungen (20a, 20b) zueinander zumindest abschnittsweise verändert werden kann,
**dadurch gekennzeichnet, dass**
die Vorrichtung mindestens zwei voneinander bei der bestimmungsgemäßen Verwendung verbindbare und trennbare Baugruppen (10, 50) aufweist, wobei
- eine Rahmenbaugruppe (10) die Halteanordnungen (20a, 20b) umfasst,
- eine Basisbaugruppe (50) die Belastungsmittel (70) umfasst und
- die Basisbaugruppe (50) und die Rahmenbaugruppe (10) derart aufeinander abgestimmt sind, dass die Rahmenbaugruppe (10) durch Auflegen in einer von der Y-Richtung abweichenden Richtung auf die Basisbaugruppe (50) bezüglich der Y-Richtung formschlüssig mit der Basisbaugruppe (50) verbindbar ist.

7. Vorrichtung nach Anspruch 6,
**gekennzeichnet durch**
Fixiermittel (40), mittels derer eine Beabstandung der Halteanordnungen (20a, 20b) variabel fixierbar ist.

8. Vorrichtung nach Anspruch 6 oder 7,
**gekennzeichnet durch**
Kopplungsmittel, mittels derer die Rahmenbaugruppe mit der Basisbaugruppe koppelbar ist.

9. Vorrichtung nach einem der Ansprüche 6 bis 8,
**dadurch gekennzeichnet, dass**
die Fixiermittel (40) derart ausgebildet sind, dass sie beim Verbinden der Rahmenbaugruppe (10) mit der Basisbaugruppe (50) automatisch entriegelt werden.

10. Vorrichtung nach einem der Ansprüche 6 bis 9,
**dadurch gekennzeichnet, dass**
die Fixiermittel (40) als druckgesteuerte Fixiermittel (40) ausgebil- , det sind, wobei Steuermittel zur Steuerung des anliegenden Mediendrucks vorzugsweise in der Basisbaugruppe angeordnet sind.

11. Vorrichtung nach einem der Ansprüche 6 bis 10,
**dadurch gekennzeichnet, dass**
ein Wegmesser und/oder ein Kraftmesser vorgesehen ist, wobei der Wegmesser zur Messung der Beabstandung der beiden Halteanordnungen ausgebildet ist und der Kraftmesser zur Messung der in Y-Richtung auf das Flächengebilde wirkenden Kraft ausgebildet ist.

12. Vorrichtung nach einem der Ansprüche 6 bis 11,
**gekennzeichnet durch**
ein Steuergerät (90), welches zur Abgabe von Ausgangssignalen und/oder zum Empfang von Eingangssignalen ausgebildet ist, die zur Durchführung des Verfahrens nach einem der Ansprüche 1 bis 5 erforderlich sind.

## Claims

1. Method for attaching guide means (106) to a flexible planar structure (100), preferably as a part of a shade system for a vehicle,
**characterized by** the steps:
- holding areas (102a, 102b) of a flexible planar structure (100) extending in an X direction and a Y direction, and at a distance from one another in a Y direction, are kept at a distance from one another by application of a predetermined pretensioning force (F_{V}) acting in the Y direction, thereby creating a pretensioned state,
- in a further processed state corresponding to the pretensioned state or to a pretensioned state relieved by a predetermined relief distance (S₃) in the Y direction compared with the pretensioned state, guide means (106) extending in the X direction and at a distance from one another in the Y direction are fastened to the planar structure (100).

2. Method according to Claim 1,
**characterized by**
an additional step before the step of force application with the predetermined pretensioning force (F_{V}):
- the flexible planar structure is subjected in the Y direction to a stretching force greater than the pretensioning force (F_{V}).

3. Method according to Claim 1 or 2,
**characterized in that**
the planar structure is held in the area of the holding areas (102a, 102b) by a holding means (20a, 20b) respectively during application of the pretensioning force (F_{V}) and these holding means (20a, 20b) are part of a separately operable common holding device (10), where the following additional steps are provided:
- before application of the pretensioning force (F_{V}), the planar structure (100) is placed into the holding device (10) and the holding means (20a, 20b) are set to a holding state,
- the holding device (10) is placed on a loading device (50) designed for application of the pretensioning force (F_{V}) and preferably coupled thereto.

4. Method according to one of the preceding claims,
**characterized by**
the following additional step:
- after attaining the further processed state, the distance between the holding means (20a, 20b) is fixed by fixing means (40) differing from the force-applying means (70) for achieving the pretensioned state.

5. Method according to one of Claims 3 to 4,
**characterized by**
the following additional step:
- after attaining the further processed state, the holding device (10) is separated from the loading device (50), where it is preferably uncoupled beforehand.

6. Device for preparation of a flexible planar structure (100) for attaching guide means (106), in particular in the course of manufacture of a shade system for a vehicle, where the device is designed for implementation of the method according to one of Claims 1 to 5,
having
- two holding arrays (20a, 20b) designed for fixing of a planar structure (100) extending in an X direction and in a Y direction, where the holding arrays (20a, 20b) are at a distance in the Y direction such that the planar structure (100) can be fixed at two rim areas (102a, 102b), and
- loading means (70) by which the distance between the two holding arrays (20a, 20b) from one another can be altered at least in some sections,
**characterized in that**
the device has at least two assemblies (10, 50) connectable to and separable from one another when used for the intended purpose, where
- a frame assembly (10) comprises the holding arrays (20a, 20b),
- a base assembly (50) comprises the loading means (70) and
- the base assembly (50) and the frame assembly (10) are matched to one another such that the frame assembly (10) can be positively connected to the base assembly (50) in respect of the Y direction by placing it on the base assembly (50) in a direction diverging from the Y direction.

7. Device according to Claim 6,
**characterized by**
fixing means (40) by which a distance between the holding arrays (20a, 20b) can be variably fixed.

8. Device according to Claim 6 or 7,
**characterized by**
coupling means by which the frame assembly can be coupled to the base assembly.

9. Device according to one of Claims 6 to 8,
**characterized in that**
the fixing means (40) are designed such that they are automatically unlocked during connection of the frame assembly (10) to the base assembly (50).

10. Device according to one of Claims 6 to 9,
**characterized in that**
the fixing means (40) are designed as pressure-controlled fixing means (40), where control means are arranged preferably inside the base assembly for controlling the prevailing media pressure.

11. Device according to one of Claims 6 to 10,
**characterized in that**
a distance meter and/or a force meter is provided, where the distance meter is designed for measuring the distance between the two holding arrays and the force meter for measuring the force acting on the planar structure in the Y direction.

12. Device according to one of Claims 6 to 11,
**characterized by**
a control unit (90) designed for emitting output signals and/or receiving input signals which are required for implementation of the method according to one of Claims 1 to 5.

## Revendications

1. Procédé d'application de moyens de guidage (106) sur une structure plane souple (100), de préférence en tant que partie d'un système d'ombrage pour un véhicule automobile,
**caractérisé par** les étapes :
- Des zones de maintien (102a, 102b), mutuellement distantes dans une direction Y, d'une structure plane souple (100) s'étendant dans une direction X et dans une direction Y, sont écartées l'une de l'autre par application d'une force de précontrainte prédéfinie (F_{V}) agissant dans la direction Y, ce qui établit un état de précontrainte,
- Dans un état de traitement ultérieur correspondant à l'état de précontrainte ou à un état de précontrainte délesté par rapport à l'état de précontrainte sur une distance de délestage prédéfinie (S₃) dans la direction Y, des moyens de guidage (106) s'étendant dans la direction X et mutuellement distants dans la direction Y sont fixés sur la structure plane (100).

2. Procédé selon la revendication 1,
**caractérisé par**
une étape supplémentaire avant l'étape d'application de la force de précontrainte prédéfinie (F_{V}) :
- Une force d'étirement supérieure à la force de précontrainte (Fv) est appliquée à la structure plane souple dans la direction Y.

3. Procédé selon la revendication 1 ou 2,
**caractérisé en ce**
**que** lors de l'application de la force de précontrainte (F_{V}), la structure plane souple est maintenue dans chaque zone de maintien (102a, 102b) par un moyen de maintien (20a, 20b), et que ces moyens de maintien (20a, 20b) font partie d'un dispositif de maintien commun (10) manoeuvrable séparément, les étapes supplémentaires suivantes étant prévues :
- Avant l'application de la force de précontrainte (F_{V}), la structure plane souple (100) est placée dans le dispositif de maintien (10) et les moyens de maintien (20a, 20b) sont commutés dans un état de maintien,
- Le dispositif de maintien (10) est posé sur un dispositif de charge (50) conçu pour appliquer la force de précontrainte (F_{V}), et de préférence couplé à celui-ci.

4. Procédé selon l'une des revendications précédentes,
**caractérisé par**
l'étape supplémentaire suivante :
- Une fois atteint l'état de traitement ultérieur, la distance entre les moyens de maintien (20a, 20b) est fixée par des moyens de fixation (40) distincts des moyens (70) appliquant la force pour atteindre l'état de précontrainte.

5. Procédé selon l'une des revendications 3 à 4,
**caractérisé par**
l'étape supplémentaire suivante :
- Une fois atteint l'état de traitement ultérieur, le dispositif de maintien (10) est séparé du dispositif de charge (50), sachant qu'il est de préférence découplé auparavant.

6. Dispositif de préparation d'une structure plane souple (100) pour appliquer des moyens de guidage (106), en particulier dans le cadre de la fabrication d'un système d'ombrage pour un véhicule automobile, le dispositif étant conçu pour réaliser le procédé selon l'une des revendications 1 à 5, et
comprenant
- deux systèmes de maintien (20a, 20b) conçus pour fixer une structure plane souple (100) s'étendant dans une direction X et une direction Y, sachant que les systèmes de maintien (20a, 20b) sont distants dans la direction Y de manière telle que la structure plane souple (100) peut être fixée sur deux zones marginales (102a, 102b), et
- des moyens de charge (70) permettant de modifier au moins sectoriellement la distance entre les deux systèmes de maintien (20a, 20b),
**caractérisé en ce**
**que** le dispositif présente au moins deux modules (10, 50) pouvant être reliés entre eux et séparés lors de l'utilisation conforme, sachant
- **qu'**un module de cadre (10) comprend les systèmes de maintien (20a, 20b),
- **qu'**un module de base (50) comprend les moyens de charge (70), et
- **que** le module de base (50) et le module de cadre (10) sont ajustés entre eux de manière telle que le module de cadre (10) peut être relié au module de base (50) par complémentarité de forme par rapport à la direction Y en le posant sur le module de base (50) selon une direction s'écartant de la direction Y.

7. Dispositif selon la revendication 6,
**caractérisé par**
des moyens de fixation (40) permettant de fixer de manière variable une distance entre les systèmes de maintien (20a, 20b).

8. Dispositif selon la revendication 6 ou 7,
**caractérisé par**
des moyens de couplage permettant de coupler le module de cadre avec le module de base.

9. Dispositif selon l'une des revendications 6 à 8,
**caractérisé en ce**
**que** les moyens de fixation (40) sont conçus de manière telle qu'ils sont automatiquement déverrouillés lors de l'assemblage du module de cadre (10) avec le module de base (50).

10. Dispositif selon l'une des revendications 6 à 9,
**caractérisé en ce**
**que** les moyens de fixation (40) sont conçus en tant que moyens de fixation commandés par pression (40), des moyens de commande pour régler la pression appliquée du fluide étant de préférence disposés dans le module de base.

11. Dispositif selon l'une des revendications 6 à 10,
**caractérisé en ce**
**qu'**un capteur de déplacement et/ou un dynamomètre est/sont prévu(s), le capteur de déplacement étant conçu pour mesurer la distance entre les deux systèmes de maintien, et le dynamomètre étant conçu pour mesurer la force exercée dans la direction Y sur la structure plane souple.

12. Dispositif selon l'une des revendications 6 à 11,
**caractérisé par**
un organe de commande (90) conçu pour émettre des signaux de sortie et/ou recevoir des signaux d'entrée qui sont nécessaires pour réaliser le procédé selon l'une des revendications 1 à 5.
